# EUROPÄISCHE PATENTANMELDUNG

(11) **EP 3 763 937 A1**
(43) Veröffentlichungstag der Anmeldung: **13.01.2021**
(21) Anmeldenummer: 19185774.7
(22) Anmeldetag: 11.07.2019
(51) Int. Cl.: F03D 1/04, F03D 1/06

(54) **ROTORBLATT FÜR EINE WINDENERGIEANLAGE UND WINDENERGIEANLAGE**

(71) Anmelder: FlowGen Development & Management GmbH, 6300 Zug (CH)
(72) Erfinder: KÜSTER, Dirk, 6417 Sattel (CH)
(74) Vertreter: Schaad, Balass, Menzl & Partner AG

(57) **Zusammenfassung**

Das Rotorblatt (10) für eine Windenergieanlage weist eine eine Bezugsebene (BE) definierende Rotorblattwurzel (12) zur Befestigung an einer Nabe auf. An die Rotorblattwurzel (12) schliesst ein Profilbereich (16) bis zur Rotorblattspitze (26) an. Im Profilbereich (16) weist das Rotorblatt (10) ein eine Sehne (34) definierendes Flügelprofil (28) auf. Der Sehnenwinkel (a) zwischen der Bezugsebene (BE) und der Sehne (34) nimmt über den gesamten Profilbereich (16), von der Rotorblattwurzel (12) her in Richtung zur Rotorblattspitze (26), zu.

## Beschreibung

Die vorliegende Erfindung betrifft ein Rotorblatt einer Windenergieanlage gemäss Anspruch 1 sowie eine Windenergieanlage gemäss Anspruch 13.

Rotorblätter von Windenergieanlagen und Windenergieanlagen mit Rotorblättern sind allgemein bekannt und beispielsweise in den Dokumenten EP 3 330 530 A1, EP 3 147 499 A1, EP 2 840 255 A2, EP 1 019 631 B1, WO 2019/030205 A1, WO 2018/046067 A1, WO 2010/046000 A2 und NL 1030111 offenbart.

Die vorliegende Erfindung betrifft insbesondere Rotorblätter einer Windenergieanlage und Windenergieanlagen mit solchen Rotorblättern, welche einen Rotordurchmesser von 1.5 m bis 8 m beziehungsweise eine Länge des Rotorblatts von ca. 0.75 m bis ca. 4 m aufweisen.

Es ist eine Aufgabe der vorliegenden Erfindung, ein Rotorblatt einer Windenergieanlage und eine Windenergieanlage mit solchen Rotorblättern zu schaffen, welche bei geringen Geräuschemissionen ein gutes Anlaufverhalten aufweisen.

Diese Aufgabe wird mit einem Rotorblatt gemäss Anspruch 1 und einer Windenergieanlage gemäss Anspruch 13 gelöst.

Ein Rotorblatt einer Windenergieanlage weist in bekannter Art und Weise eine Rotorblattwurzel zum Befestigen des Rotorblatts an einer Rotorwelle beziehungsweise an einer Nabe auf. Die Rotorblattwurzel definiert eine Bezugsebene.

Die Nabe ist üblicherweise an der Rotorwelle befestigt. Im Betrieb ist die Rotorwelle beziehungsweise deren Drehachse wenigstens annähernd in Richtung des anströmenden Winds ausgerichtet.

Ein Profilbereich des Rotorblatts schliesst an die Rotorblattwurzel an und erstreckt sich bis in einen der Rotorblattwurzel abgewandten Rotorblattspitzenbereich. Bevorzugt erstreckt sich der Profilbereich bis zur Rotorblattspitze, d.h. bis zum freien Ende des Rotorblatts; es ist jedoch auch denkbar, dass der Profilbereich in einem Abstand zur Rotorblattspitze, im Rotorblattspitzenbereich, endet und das Rotorblatt anschliessend an den Profilbereich bis zur Rotorblattspitze ein Rotorblattendelement unterschiedlicher Form aufweist.

Eine Rotorblattnase sowie eine Rotorblatthinterkante verlaufen über die gesamte Länge des Profilbereichs. Ein Flügelprofil des Rotorblatts, welches sich über den gesamten Profilbereich von der Rotorblattnase bis zur Rotorblatthinterkante erstreckt, weist eine eine Saugseite bildende Oberseite und eine eine Druckseite bildende Unterseite auf.

Die Oberseite befindet sich leeseitig und die Unterseite luvseitig.

Eine Sehne des Flügelprofils verläuft durch die Rotorblattnase und die Rotorblatthinterkante. Die Sehne und die Bezugsebene schliessen einen Sehnenwinkel ein, wobei die Unterseite des Flügelprofils der Bezugsebene zugewandt und die Oberseite des Flügelprofils der Bezugsebene abgewandt ist.

Der Abstand zwischen der Bezugsebene und der Sehne ist in Richtung zur Rotorblattnase hin zunehmend.

Die Bezugsebene BE schliesst, im montierten Zustand des Rotorblatts 10, mit der Rotorwelle 18 und somit deren Drehachse 20 einen Anstellwinkel β von vorzugsweise maximal 70° und minimal 50° ein. Dieser Anstellwinkel β ist der kleinste messbare Winkel zwischen der Drehachse 20 und der Bezugsebene BE.

Die Unterseite des Flügelprofils ist dazu bestimmt, vom Wind angeströmt zu werden.

Erfindungsgemäss nimmt der Sehnenwinkel über den Profilbereich, von der Rotorblattwurzel her in Richtung zum Rotorblattspitzenbereich, zu.

Versuche und Computersimulationen haben gezeigt, dass ein derartiges Rotorblatt und Windenergieanlagen mit derartigen Rotorblättern bereits bei tiefen Windgeschwindigkeiten von beispielsweise 4.5 m bis 5 m pro Sekunde einen guten cp Wert bei geringen Lärmemissionen zeigen und somit gute Anlaufeigenschaften aufweisen.

In bevorzugter Weise nimmt der Sehnenwinkel kontinuierlich zu, besonders bevorzugt wenigstens annähernd linear, was zu einem Rotorblatt mit hoher Effizienz und einfachem Aufbau führt.

Diese Zunahme des Sehnenwinkels erfolgt bevorzugt bis zur Rotorblattspitze. Der Sehnenwinkel kann jedoch auch von der Rotorblattwurzel bis zum Rotorblattspitzenbereich linear und im Rotorblattspitzenbereich stärker zunehmen, was das gute Anspringverhalten bei tiefen Windgeschwindigkeiten unterstützt.

Bevorzugt beträgt der Sehnenwinkel in einem unmittelbar an die Rotorblattwuzel anschliessenden Anfangsabschnitt zwischen 0° und 4° und im Rotorblattspitzenbereich zwischen 20° und 26°. Dies führt bei Rotorblattlängen von ca. 0.75 m bis ca. 4 m und somit Rotordurchmessern von ca. 1.5 m bis ca. 8 m zu guten Ergebnissen.

Bevorzugt beträgt der Sehnenwinkel beim Rotorblattwurzel-seitigen Ende des Profilbereichs 0°.

In bevorzugter Weise verläuft die Rotorblatthinterkante wenigstens annähernd geradlinig. Dies führt zu einem besonders einfachen Aufbau des Rotorblatts.

Der besonders einfache Aufbau und die gute Effizienz wird unterstützt, wenn die Rotorblatthinterkante, wie bevorzugt, wenigstens annähernd in der Bezugsebene verläuft.

Bevorzugt nimmt die Profiltiefe über den gesamten Profilbereich, von der Rotorwurzel her in Richtung zum Rotorblattspitzenbereich, ab. Dadurch kann die mechanische Beanspruchung des Rotorblatts tief gehalten werden.

Bevorzugt nimmt die Profiltiefe kontinuierlich ab, besonders bevorzugt linear. Auch dies führt zu einem besonders einfachen und effizienten Rotorblatt.

Bevorzugt nimmt die Profiltiefe, ausgehend im Anschluss an die Rotorblattwurzel bis in den Rotorblattspitzenbereich auf die Hälfte bis ein Viertel, vorzugsweise wenigstens annähernd auf einen Drittel ab. Dies führt zu einem im Aufbau einfachen, stabilen und effizienten Rotorblatt.

In bevorzugter Weise nimmt auch die Profildicke über den gesamten Profilbereich, von der Rotorblattwurzel her in Richtung zum Rotorblattspitzenbereich, ab. Dies bevorzugt kontinuierlich, insbesondere wenigstens annähernd linear. Dadurch kann das Flügelprofil im gesamten Profilbereich wenigstens annähernd die gleiche Form aufweisen (es ist sich ähnlich), was zu einem besonders einfachen Aufbau führt.

Es hat sich gezeigt, dass ein in bevorzugter Weise wenigstens annähernd konstantes Verhältnis von Profildicke zu Profiltiefe im gesamten Profilbereich zu einem effizienten und im Aufbau einfachen Rotorblatt führt. Bevorzugt ist dieses Verhältnis wenigstens annähernd 0,07.

Bevorzugt beträgt das Verhältnis der Profiltiefe, gemessen beim Rotorblattwurzel-seitigen Ende des Profilbereichs, zur Länge des Profilbereichs (in Längsrichtung des Rotorblatts gemessen) wenigstens annähernd 0.2.

Das Rotorblatt ist dazu bestimmt, um die Drehachse der Windenergieanlage zu rotieren, wobei die Drehachse im Betrieb wenigstens annähernd in Richtung des anströmenden Windes ausgerichtet ist und das Rotorblatt, wie bevorzugt, sich auf der LUV-Seite befindet. Es kann dann ungestört vom Wind angeströmt werden.

Beim Flügelprofil handelt es sich bevorzugt um ein Normalprofil mit einer konvex gebogenen Oberseite und einer S-förmig gebogenen Unterseite, wobei sich auf der Unterseite der Übergang von der konvexen zur konkaven Form nahe bei der Profilnase befindet, bevorzugt innerhalb der ersten 15% der Profiltiefe. Dadurch ergibt sich ein schlankes Flügelprofil.

Eine mit derartigen Rotorblättern ausgerüsteten Energieanlage weist eine eine Drehachse bestimmende Rotorwelle mit einer darauf festsitzenden Nabe auf, an welcher die Rotorblätter befestigt sind. Im Betrieb der Windenergieanlage ist die Drehachse wenigstens annähernd in Richtung des anströmenden Windes ausgerichtet und befinden sich die Rotorblätter, für eine ungestörte Anströmung, auf der LUV-Seite.

Die Windenergieanlage weist bevorzugt zwei bis fünf, besonders bevorzugt drei Rotorblätter auf. Einerseits ist dadurch ein symmetrischer Aufbau und andererseits damit ein ruhiger Lauf gewährleistet.

Bevorzugt ist die Windenergieanlage in Form einer Mantelwindturbine ausgebildet um eine besonders gute Effizient zu erzielen.

Bevorzugt ist das Rotorblatt dazu bestimmt, sich mit seiner Längsrichtung wenigstens annähernd in radialer Richtung zur Drehachse zu erstrecken. Entsprechendes gilt für Windenergieanlagen mit zwei oder mehr Rotorblättern, wobei diese in Umfangsrichtung gleichmässig verteilt angeordnet sind.

Die Rotorblattnase verläuft bevorzugt wenigstens annähernd in einer rechtwinklig zur Bezugsebene verlaufenden Ebene.

Es ist auch möglich, die Rotorblattwurzel an der Nabe beziehungsweise an der Rotorwelle um eine in Längsrichtung des Rotorblatts verlaufende Schwenkachse schwenkbar anzuordnen, dies insbesondere um das Rotorblatt in eine Neutralstellung zu verschwenken, wenn keine Antriebskraft erzeugt werden soll, oder die Anströmung zu optimieren.

Der Vollständigkeit halber sei erwähnt, dass im Betreib die Rotorblattnase, in Drehrichtung des Rotorblatts, vorlaufend und die Rotorblatthinterkante nachlaufend ist.

Bevorzugt ist die Rotorblattwurzel zur Befestigung an der Nabe beziehungsweise der Rotorwelle mit zwei Befestigungsösen versehen, deren Durchlass wenigstens annähernd rechtwinklig zur Bezugsebene verläuft.

Die Erfindung wird anhand der Figuren näher beschrieben. Es zeigen rein schematisch:
- Fig. 1: in Ansicht ein erfindungsgemässes Rotorblatt;
- Fig. 2: einen Schnitt durch das Rotorblatt gemäss Fig. 1 entlang der Schnittlinie B-B;
- Fig. 3: einen Schnitt durch das Rotorblatt gemäss Fig. 1 entlang der Schnittlinie C-C;
- Fig. 4: einen Schnitt durch das Rotorblatt gemäss Fig. 1 entlang der Schnittlinie D-D;
- Fig. 5: einen Schnitt durch das Rotorblatt gemäss Fig. 1 entlang der Schnittlinie E-E;
- Fig. 6: einen Schnitt durch das Rotorblatt gemäss Fig. 1 entlang der Schnittlinie F-F;
- Fig. 7: das Rotorblatt gemäss den Fig. 1 bis 6 in Seitenansicht in Richtung des Pfeiles VII der Fig. 1;
- Fig. 8: das Rotorblatt gemäss den Fig. 1 bis 7 in Seitenansicht in Richtung des Pfeiles VIII der Fig. 1;
- Fig. 9: einen Schnitt durch das Rotorblatt entlang der Schnittlinie A-A der Fig. 1;
- Fig. 10: eine Ansicht von unten auf das in den Fig. 1 bis 9 gezeigte Rotorblatt;
- Fig. 11: eine Ansicht von oben auf das in den Fig. 1 bis 10 gezeigte Rotorblatt;
- Fig. 12: einen Längsschnitt durch das Rotorblatt entlang der, rechtwinklig zu einer Drehachse verlaufenden Schnittlinie G-G der Fig. 1;
- Fig. 13: in perspektivischer Darstellung eine Windenergieanlage mit drei Rotorblättern gemäss den Fig. 1 bis 12; und
- Fig. 14: in perspektivischer Darstellung eine in der Art einer Mantelwindturbine ausgebildete Windenergieanlage mit drei Rotorblättern gemäss den Fig. 1 bis 12.

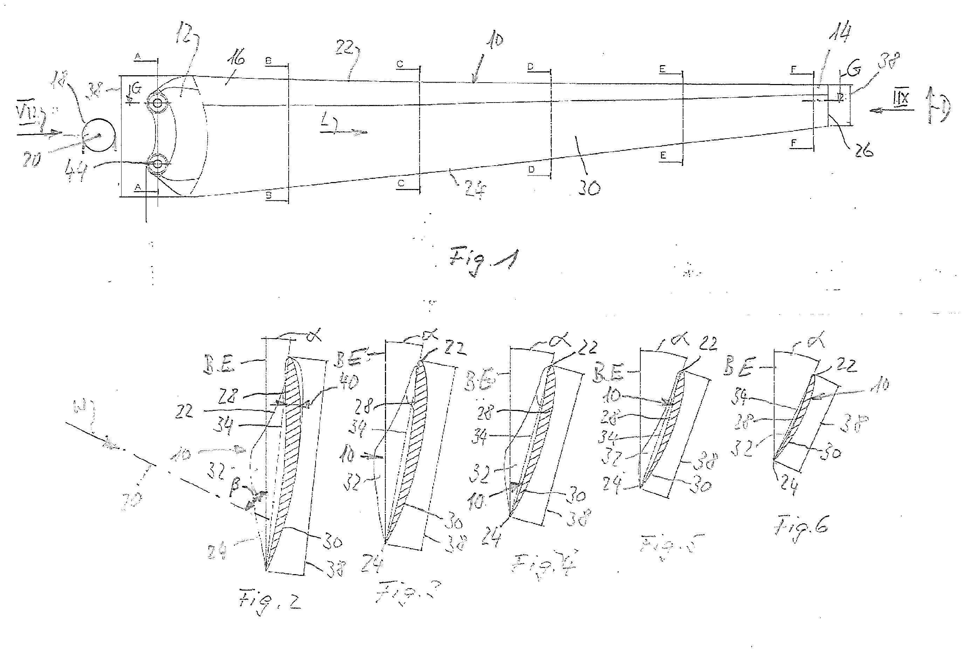

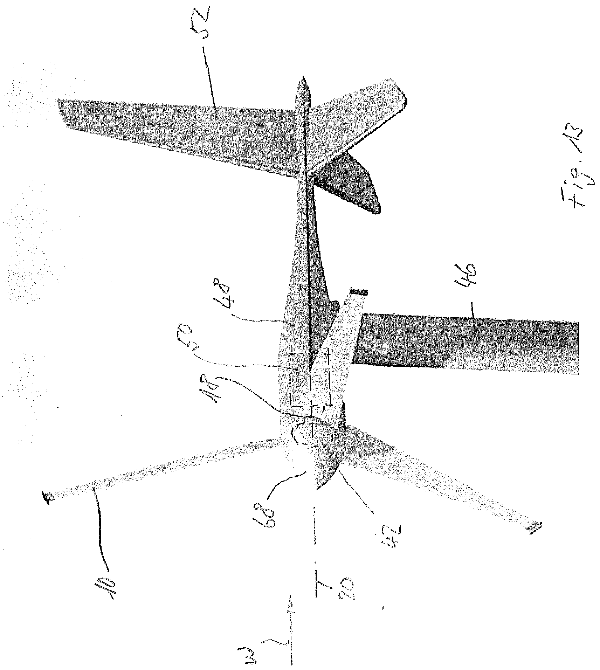

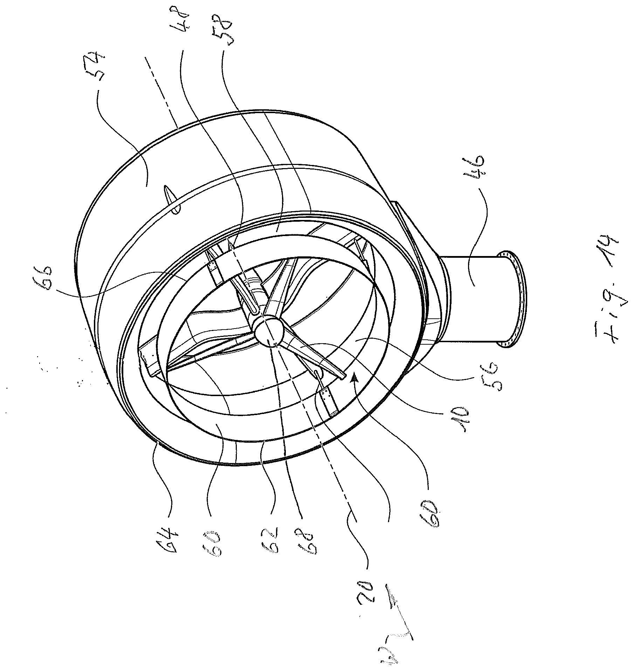

Das in den Fig. 1 bis 12 dargestellte Rotorblatt 10 weist eine Rotorblattwurzel 12 und einen an die Rotorblattwurzel 12 unmittelbar anschliessenden sowie sich bis in einen der Rotorblattwurzel 12 abgewandten Rotorblattspitzenbereich 13 erstreckenden Profilbereich 16 auf. Das Rotorblatt 10 ist dazu bestimmt, mit der Rotorblattwurzel 12 an einer Nabe befestigt zu werden beziehungsweise an dieser befestigt zu sein. Diese Nabe sitzt in bekannter Art und Weise drehfest auf einer Rotorwelle 18, welche eine Drehachse 20 für das Rotorblatt 10 definiert. Im Weiteren wird in diesem Zusammenhang auf die Fig. 13 und 14 sowie die betreffende Beschreibung weiter unten verwiesen.

Eine in Drehrichtung D des Rotorblatts 10 vorlaufende Rotorblattnase 22 und eine nachlaufende Rotorblatthinterkante 24 verlaufen über den gesamten Profilbereich 16.

Im gezeigten Ausführungsbeispiel erstreckt sich der Profilbereich 16 bis zur Rotorblattspitze 26, d.h. bis zum freien Ende des Rotorblatts 10. Es ist jedoch denkbar, dass sich der Profilbereich 16 nur in den Rotorblattspitzenbereich 14 erstreckt und das Rotorblatt 10 dann anschliessend an den Profilbereich 16 bis zur Rotorblattspitze 26 ein Rotorblattendelement anderer Form aufweist.

Im Profilbereich 16 weist das Rotorblatt 18 ein Flügelprofil 28 auf, welches in bekannter Art und Weise mit seiner Oberseite 30 eine Saugseite und mit seiner Unterseite 32 eine Druckseite bildet. Das Flügelprofil 28 erstreckt sich von der Rotorblattnase 22 bis zur Rotorblatthinterkante 24.

In Fig. 2 ist mit einem Pfeil W die Richtung des im Betrieb das Rotorblatt anströmenden Winds angegeben. Die Unterseite 32 befindet sich somit luvseitig und die Oberseite 30 befindet sich leeseitig.

Das Flügelprofil 28 weist eine Sehne 34 auf, welche durch die Rotorblattnase 22 und die Rotorblatthinerkante 24 verläuft und einen Sehnenwinkel α definiert. Dieser Sehnenwinkel α ist durch den (kleinsten) Winkel zwischen der Sehne 34 und einer Bezugsebene BE definiert.

Im Ausführungsbeispiel ist die Bezugsebene BE durch die ebene Oberfläche der Rotorblattwurzel 12 bestimmt. Die Bezugsebene E erstreckt sich weiter in der radial zur Drehachse 20 verlaufenden Längsrichtung L des Rotorblatts 10.

Wie dies der Fig. 2 entnehmbar ist, schliesst die Bezugsebene BE mit der Drehachse 20 einen Anstellwinkel β von minimal 50° und maximal 70° ein.

Wie dies weiter insbesondere aus den Fig. 2 bis 6 hervorgeht, nimmt der Sehnenwinkel α über den gesamten Profilbereich 16, von der Rotorblattwurzel 20 her in Richtung zur Rotorblattspitze 26 bis zu dieser kontinuierlich zu.

Üblicherweise ist das an der Rotorwelle 18 beziehungsweise einer darauf sitzenden Nabe befestigte Rotorblatt 10 bis zum diesseitigen Beginn des Profibereichs 16, d. h. die Rotorblattwurzel 12, von einer Wellenhaube 68 abgedeckt, wie dies im Zusammenhang mit den Fig. 13 und 14 gezeigt ist.

Unmittelbar angrenzend an die Rotorblattwurzel 12 ist im gezeigten Ausführungsbeispiel der Sehnenwinkel α 0°. Es ist jedoch auch möglich, dass dieser einige wenige Winkelgrad, bis beispielsweise 4°, aufweisen kann.

Im gezeigten Ausführungsbeispiel beträgt der Sehnenwinkel bei der Rotorblattspitze ca. 26°. Er kann jedoch auch kleiner oder grösser gewählt werden. Im Rotorblattspitzenbereich 14 liegt der Sehnenwinkel α bevorzugt zwischen 20° und 28°.

Wie dies insbesondere aus den Fig. 2 bis 6 in Zusammenschau mit Fig. 1 hervorgeht, nimmt der Sehnenwinkel α von der Rotorblattwurzel 12 her in Richtung zur Rotorblattspitze 26 linear zu.

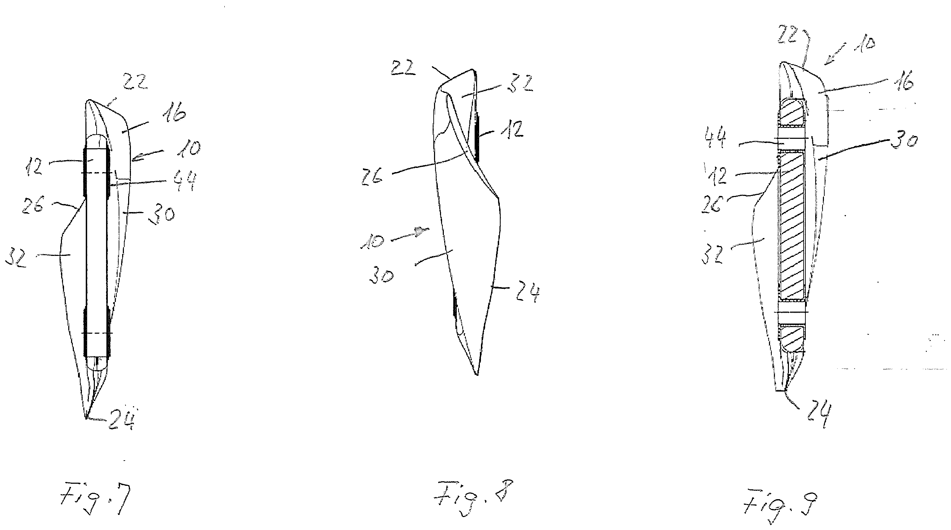

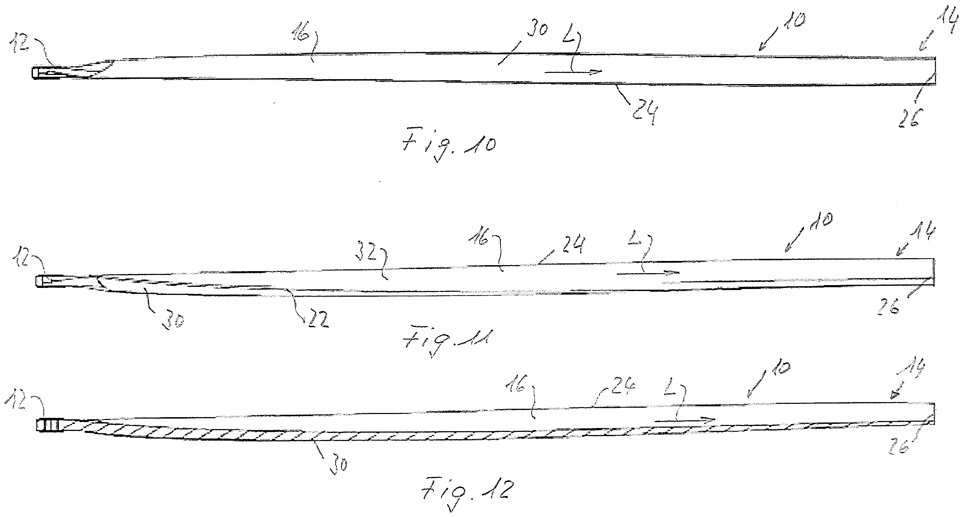

In der Ansicht gemäss Fig. 1 sind die Rotorblattnase 22 und die Rotorblatthinterkante 24 gerade. In Folge der Änderung des Sehnenwinkels α verläuft die Rotorblattnase 22, wie dies insbesondere aus den Fig. 7 bis 12 hervorgeht, leicht gekrümmt während sich die Rotorblatthinterkante 24 (vergl. Fig. 10) über ihre gesamte Länge annähernd in der Bezugsebene BE befindet.

Die Profiltiefe 38, das heisst der Abstand zwischen der Rotorblattnase 22 und Rotorblatthinterkante 24 nimmt über den gesamten Profilbereich 16, von der Rotorblattwurzel 12 her in Richtung zur Rotorblattspitze 26, kontinuierlich ab, im gezeigten Ausführungsbeispiel linear.

Bei der Rotorblattspitze 26 beträgt im gezeigten Ausführungsbeispiel die Profiltiefe 38 ein Drittel der Profiltiefe 38 beim Rotorblattwurzel 12 seitigen Ende des Profilbereichs 16.

Das Verhältnis von der Profiltiefe 36 beim Rotorblattwurzel seitigen Ende des Profilbereichs 16 zur Länge des Profilbereichs 36 - d.h. dem Abstand zwischen der Rotorblattwurzel 12 und der Rotorblattspitze 26 - beträgt 0.2.

Auch die Profildicke 40 nimmt über den gesamten Profilbereich 16 von der Rotorblattwurzel 12 her bis zur Rotorblattspitze 26 kontinuierlich ab, im gezeigten Ausführungsbeispiel linear.

Das Verhältnis von der Profildicke 40 zur Profiltiefe 38 beträgt im gesamten Profilbereich 16 annähernd 0.07. Folglich handelt es sich um ein sehr schlankes Flügelprofil 28.

Wie dies insbesondere den Fig. 2 bis 6 entnehmbar ist, handelt es sich beim gezeigten Flügelprofil 28 um ein Normalprofil mit einer konvex gebogenen Oberseite 30 und einer S-förmig gebogenen Unterseite 32, wobei auf der Unterseite 32 der Übergang von konvexen zum konkaven Bereich nahe bei der Rotorblattnase 22 liegt; die Entfernung von der Rotorblattnase 22 beträgt etwa 10% der Profiltiefe 38.

Wie diese insbesondere auch aus den Fig. 13 und 14 hervorgeht, ist das Rotorblatt 10 dazu bestimmt, um die Drehachse 20 der Windenergieanlage zu rotieren, wobei die Drehachse wenigstens annähernd in Richtung des anströmenden Windes W verläuft und das Rotorblatt 10 sich luvseitig der Windenergieanlage befindet.

Die beiden in den Fig. 13 und 14 gezeigten Windenergieanlagen sind je mit drei Rotorblättern 10 gemäss den Fig. 1 bis 12 und wie oben beschrieben ausgerüstet.

Diese Rotorblätter 10 sind an der Nabe 42 mittels zweier nicht gezeigten Bolzen befestigt, welche, wie dies insbesondere Fig. 9 zeigt, je eine Befestigungsöse 44 der Rotorblattwurzel 12 durchgreifen. Die Längsrichtung dieser Befestigungsösen 44 und somit der Bolzen verläuft rechtwinklig zur Bezugsebene BE.

Bei der in der Fig. 13 gezeigten Ausführungsform der Windenergieanlage sitzt auf einem Vertikalträger 46 ein stromlinienförmiges Generatorgehäuse 48, in welchem ein Generator 50 zur Erzeugung elektrischer Energie angeordnet ist. An der Nabe 46, welche auf der den Generator 50 antreibenden Rotorwelle 18 sitzt, sind die drei Rotorblätter 10 in Umfangsrichtung gleichmässig verteilt befestigt. Am leeseitigen Ende des Generatorgehäuses 48 befindet sich ein Leitwerk 52, um das Generatorgehäuse 48 um die Vertikalachse des Vertikalträgers 46 derart auszurichten, dass die Drehachse 20 gegen den anströmenden Wind 36 ausgerichtet ist. Die Rotorblattwurzeln 12 sind von der Wellenhaube 68 abgedeckt.

Die in der Fig. 14 gezeigte Ausführungsform der Windenergieanlage ist als Mantelwindturbine ausgebildet, wie sie im Dokument WO 2019/076514 A1 offenbart ist, wobei jedoch die drei Rotorblätter 10 gemäss den Fig. 1 bis 12 ausgebildet sind.

Auf dem Vertikalträger 36 sitzt, um die Vertikalachse drehbar, ein Mantel 54, welcher zur Drehachse 22 rotationssymmetrisch ausgebildet ist und einen flügelförmigen Querschnitt aufweist. Die innen liegende Manteloberseite 56 begrenzt einen Strömungskanal 58 für den Wind. Ein Leitelement 60 ist ringförmig und zur Drehachse 20 rotationssymmetrisch ausgebildet. Der Aussendurchmesser des Leitelements 60 ist kleiner als die kleinste lichte Weite des Strömungskanals 58.

Die Leitelementprofilnase 62 befindet sich bezüglich der Mantelprofilnase 64 stromaufwärts und die Leitelementprofilhinterkante 66 ist bezüglich der Mantelprofilnase 64 stromabwärts, jedoch bezüglich der kleinsten lichten Weite des Strömungskanals 58 stromaufwärts angeordnet.

Der Propeller mit den drei Rotorblättern 10 zum Antrieb des elektrischen Generators 50 befindet sich wenigstens annährend bei der Leitelementprofilhinterkante 66.

Zur Ausrichtung des Mantels 54 und somit der Drehachse 20 gegen den anströmenden Wind 36 ist der Mantel 54 um die Achse des Vertikalträgers 46 motorisch drehbar.

Der vorliegende Erfindungsgegenstand kann auch wie folgt definiert werden:
Rotorblatt einer Windenergieanlage mit einer Rotorblattwurzel 12 zum Befestigen des Rotorblatts 10 an einer Nabe, einem an die Rotorblattwurzel 12 anschiessenden und sich bis in einen der Rotorblattwurzel 12 abgewandten Rotorblattspitzenbereich 14 erstreckenden Profilbereich 16, einer Rotorblattnase 22 sowie einer Rotorblatthinterkante 24, welche über den gesamten Profilbereich 16 verlaufen, einer eine Saugseite bildende Oberseite 30 und einer eine Druckseite bildenden Unterseite 32 eines über den gesamten Profilbereich 16 sich von der Rotorblattnase 22 bis zur Rotorblatthinterkante 24 erstreckenden Flügelprofils 28, sowie einer durch die Rotorblattnase 22 und die Rotorblatthinterkante 24 verlaufenden Sehne 34 des Flügelprofils 28, wobei ein Sehnenwinkel α zwischen einer Bezugsebene BE und der Sehne 34 über den Profilbereich 16, von der Rotorblattwurzel 12 her in Richtung zum Rotorblattspitzenbereich 14, zunimmt.

Die Bezugsebene BE verläuft in Längsrichtung L des Rotorblatts 10 und in ihr verläuft wenigstens annähernd die Sehne 34 beim Rotorblattwurzel-seitigen Ende des Profilbereichs 16.

Die Oberseite 30 des Flügelprofils 28 ist der Bezugsebene BE abgewandt und befindet sich leeseitig; entsprechend befindet sich die Unterseite 32 luvseitig.

Die Bezugsebene E schliesst mit der Drehachse 20 und somit dem anströmenden Wind einen Anstellwinkel β zwischen vorzugsweise 50° und 70° ein.

## Patentansprüche

1. Rotorblatt einer Windenergieanlage mit einer eine Bezugsebene (BE) definierenden Rotorblattwurzel (12) zum Befestigen des Rotorblatts (10) an einer Nabe, einem an die Rotorblattwurzel (12) anschiessenden und sich bis in einen der Rotorblattwurzel (12) abgewandten Rotorblattspitzenbereich (14) erstreckenden Profilbereich (16), einer Rotorblattnase (22) sowie einer Rotorblatthinterkante (24), welche über den gesamten Profilbereich (16) verlaufen, einer eine Saugseite bildende Oberseite (30) und einer eine Druckseite bildenden Unterseite (32) eines über den gesamten Profilbereich (16) sich von der Rotorblattnase (22) bis zur Rotorblatthinterkante (24) erstreckenden Flügelprofils (28), sowie einer durch die Rotorblattnase (22) und die Rotorblatthinterkante (24) verlaufenden Sehne (34) des Flügelprofils (28), **dadurch gekennzeichnet, dass** ein Sehnenwinkel (a) zwischen der Bezugsebene (BE) und der Sehne (34) über den Profilbereich (16), von der Rotorblattwurzel (12) her in Richtung zum Rotorblattspitzenbereich (14), zunimmt.

2. Rotorblatt nach Anspruch 1, **dadurch gekennzeichnet, dass** der Sehnenwinkel (a) kontinuierlich zunimmt.

3. Rotorblatt nach Anspruch 1 oder 2, **dadurch gekennzeichnet, dass** der Sehnenwinkel (a) in einem an die Rotorblattwurzel (12) anschliessenden Anfangsabschnitt zwischen 0° und 4° und im Rotorblattspitzenbereich (14) zwischen 20° und 28° beträgt.

4. Rotorblatt nach einem der Ansprüche 1 bis 3, **dadurch gekennzeichnet, dass** die Rotorblatthinterkante (24) wenigstens annähernd geradlinig verläuft.

5. Rotorblatt nach einem der Ansprüche 1 bis 4, **dadurch gekennzeichnet, dass** die Profiltiefe (38) über den gesamten Profilbereich (16), von der Rotorblattwurzel (12) her in Richtung zum Rotorblattspitzenbereich (14), abnimmt.

6. Rotorblatt nach Anspruch 5, **dadurch gekennzeichnet, dass** die Profiltiefe (38) kontinuierlich abnimmt.

7. Rotorblatt nach Anspruch 5 oder 6, **dadurch gekennzeichnet, dass** die Profiltiefe (38) auf die Hälft bis einen Viertel, vorzugsweise wenigstens annähernd auf einen Drittel abnimmt.

8. Rotorblatt nach einem der Ansprüche 1 bis 7, **dadurch gekennzeichnet, dass** die Profildicke (40) über den gesamten Profilbereich (16), von der Rotorblattwurzel (12) her in Richtung zum Rotorblattspitzenbereich (14), abnimmt.

9. Rotorblatt nach Anspruch 8, **dadurch gekennzeichnet, dass** die Profildicke (40) kontinuierlich abnimmt.

10. Rotorblatt nach Anspruch 8 oder 9, **dadurch gekennzeichnet, dass** das Verhältnis von Profildicke (40) zu Profiltiefe (38) im gesamten Profilbereich (16) wenigstens annähernd konstant ist, vorzugsweise wenigstens annähernd 0.07 beträgt.

11. Rotorblatt nach einem der Ansprüche 1 bis 10, **dadurch gekennzeichnet, dass** das Rotorblatt (10) dazu bestimmt ist, um eine Drehachse (20) der Windenergieanlage zu rotieren, wobei die Drehachse (20) wenigstens annähernd in Richtung des anströmenden Windes (36) verläuft, und die Bezugsebene (BE) mit der Drehachse (20) einen Anstellwinkel (β) von mindestens 50° einschliesst.

12. Rotorblatt nach einem der Ansprüche 1 bis 11, **dadurch gekennzeichnet, dass** das Flügelprofil (28) ein Normalprofil mit einer konvex gebogenen Oberseite (30) und einer S-förmig gebogenen Unterseite (32) ist.

13. Windenergieanlage mit einer eine Drehachse (20) bestimmenden Rotorwelle (18) mit einer Nabe (42), an welcher Rotorblätter (10) gemäss einem der Ansprüche 1 bis 12 mit ihrer Rotorblattwurzel (12) befestigt sind, wobei die Drehachse (20) im Betrieb wenigstens annähernd in Richtung des anströmenden Windes (36) ausgerichtet ist.
